# EUROPÄISCHE PATENTSCHRIFT

(11) **EP 3 907 075 B1**
(45) Veröffentlichungstag und Bekanntmachung des Hinweises auf die Patenterteilung: **12.07.2023**
(21) Anmeldenummer: 21171735.0
(22) Anmeldetag: 02.05.2021
(51) Int. Cl.: B32B 27/32, B29C 48/08, B32B 7/023, B32B 7/027, B32B 7/12, B32B 27/08

(54) **LAMINIERTES VERPACKUNGSMATERIAL MIT EINER EINEN DRUCKTRÄGER BILDENDEN KUNSTSTOFFFOLIE**
LAMINATED PACKAGING MATERIAL WITH A PLASTIC FILM FORMING A PRINTING SUBSTRATE
MATIÈRE D'EMBALLAGE LAMINÉE DOTÉE D'UNE FEUILLE EN MATIÈRE PLASTIQUE FORMANT UN SUPPORT D'IMPRESSION

(30) Priorität: 06.05.2020 AT 5009620 U
(43) Veröffentlichungstag der Anmeldung: 10.11.2021
(73) Patentinhaber: Coveris Flexibles Austria GmbH, 6336 Langkampfen (AT)
(72) Erfinder: Geißler, Bernd, 6343 Erl (AT); Shaw, Ian, Nantwich, CW5 5UE (GB); Vollmer, Jan - Torsten, 83355 Grabenstäb (DE)
(74) Vertreter: Schneider, Michael

(56) Entgegenhaltungen:
- WO-A1-2018/187438
- US-A1- 2016 039 181
- US-A1- 2018 170 015

## Beschreibung

### TECHNISCHES FELD

Die Erfindung betrifft eine Verwendung einer einen Druckträger bildenden Kunststofffolie in einem laminierten Verpackungsmaterial zum Tragen des Aufdrucks.

### HINTERGRUND

Gegenwärtig erhältliche Verpackungsmaterialien als Multimateriallaminate zeichnen sich dadurch aus, dass jene Kunststofffolie, welche den Aufdruck des Verpackungsmaterials trägt, also die als Druckträger fungierende Kunststofffolie, optimierte technische Eigenschaften in Bezug auf eine hohe Transparenz, eine hohe Steifigkeit, eine gute Temperaturbeständigkeit (optimiert auf Heißsiegelanwandungen), einen geringen Rückschrumpf bei Temperatureinwirkung und eine gute mechanische Stabilität, insbesondere gegen Spleiß-Neigung, aufweist. Als beispielhaftes Verpackungsmaterial sei an dieser Stelle ein Laminat aus Polyethylenterephthalat (PET) und Polyethylen (PE) angeführt, wobei hier der Druckträger zur Erzielung der angeführten technischen Eigenschaften durch die PET-Folie gebildet ist. Die WO 2018/187438 A1 offenbart PE-Filme als Verpackungsmaterial für etwa Beutel, die eine HDPE-Lage enthalten, welche mittels Gießfolien-Extrusion hergestellt werden kann. Exemplarisch weist der Film eine bedruckbare Multilage auf und eine siegelbare Multilage, wobei die bedruckbare Multilage aus zwei äußeren LLDPE Lagen und einer mittleren HDPE Lage besteht. Die US 2016/039181 A1 offenbart mehrlagige Filme als Verpackungsmaterialien, welche mittels Gießfolien-Extrusion hergestellt werden. Die Filme weisen drei unterschiedliche HDPE auf. Eine weitere PE-Siegellage kann vorhanden sein.

Neben dieser technischen Optimierung solcher Verpackungsmaterialien besteht jedoch auch der gesellschaftliche Wunsch oder auch der durch regulatorische Rahmenbedingung veranlasste Bedarf, dass Verpackungsmaterialien bestmöglich recycelbar sein sollen. Dies lässt sich jedoch mit den gegenwärtig erhältlichen Verpackungsmaterialien nicht oder nur mit sehr hohem Aufwand umsetzen, da die gängigen Verpackungsmaterialien zur Erfüllung unterschiedlichster Anforderungsprofile oft sehr komplex aus Lagen unterschiedlicher Kunststoffe aufgebaut sind. Dies führt dazu, dass solche Mehrschichtfolien oft nur im Down-Cycling-Prozess landen, wobei sie letztendlich z.B. in Form von Kunststoff-Bauzäunen oder -Gartenbänken weiterverwendet werden oder überhaupt nur der Verbrennung in Fernwärmeanlagen zugeführt werden. Für ein tatsächliches Recyceln müssten die unterschiedlichen Kunststofflagen sortenrein zugänglich gemacht werden, was jedoch sehr komplexe Recycling-Prozesse bedingt.

Es ist daher eine Aufgabe der Erfindung, einen alternativen Druckträger für ein Verpackungsmaterial bereitzustellen, bei dem im Wesentlichen keine Kompromisse bei der Qualität des Aufdrucks bzw. dessen optischer Wahrnehmbarkeit beim betrachtenden Kunden nötig sind und das Verpackungsmaterial zudem unproblematisch recycelbar ist.

### ZUSAMMENFASSUNG DER ERFINDUNG

Diese Aufgabe wird durch eine erfindungsgemäße Verwendung gelöst.

Der Gegenstand der Erfindung ist daher eine Verwendung einer durch Gießfolien-Extrusion hergestellten ersten Polyethylen-Folie hoher Dichte und hoher Transparenz angegeben als Haze < 10% als Druckträger, zum Tragen eines Aufdrucks in einem laminierten Verpackungsmaterial, wobei die erste Polyethylen-Folie gegen eine zweite Polyethylen-Folie laminiert ist, und die zweite Polyethylen-Folie in dem laminierten Verpackungsmaterial als Siegelfolie Verwendung findet und einen derart niedrigeren Schmelzpunkt als die erste Polyethylen-Folie aufweist, dass in Heiß-Siegelanwendungen die erste Polyethylen-Folie unbeeinflusst bleibt, wobei die erste Polyethylen-Folie einen Schmelzpunkt im Bereich von 130 bis 135 °C und eine Dichte größer 0,930 g/cm³ aufweist.

Die gestellte Aufgabe wird zudem durch ein erfindungsgemäßes Herstellungsverfahren gelöst.

Der Gegenstand der Erfindung ist daher auch ein Herstellungsverfahren zur Herstellung eines laminierten Verpackungsmaterials, wobei eine erste Polyethylen-Folie mit hoher Dichte und hoher Transparenz angegeben als Haze < 10% in einem Gießfolien-Extrusion-Verfahren hergestellt wird, wobei die erste Polyethylen-Folie bei ihrer Verwendung in dem laminierten Verpackungsmaterial als Druckträger zum Tragen eines Aufdrucks zum Einsatz kommt, wobei die erste Polyethylen-Folie mit einem Aufdruck bedruckt wird und die erste Polyethylen-Folie mit Hilfe einer Haftvermittlerschicht gegen eine zweite Polyethylen-Folie laminiert wird, wobei die zweite Polyethylen-Folie in dem laminierten Verpackungsmaterial als Siegelfolie Verwendung findet und einen derart niedrigeren Schmelzpunkt als die erste Polyethylen-Folie aufweist, dass in Heiß-Siegelanwendungen die erste Polyethylen-Folie unbeeinflusst bleibt, wobei die erste Polyethylen-Folie einen Schmelzpunkt im Bereich von 130 bis 135 °C und eine Dichte größer 0,930 g/cm³ aufweist.

Die gestellte Aufgabe wird zudem durch eine erfindungsgemäße Verpackung gelöst.

Der Gegenstand der Erfindung ist daher auch eine Verpackung, die aus einem Verpackungsmaterial gefertigt ist, das gemäß dem erfindungsgemäßen Herstellungsverfahren hergestellt wurde, wobei die Verpackung ein aus dem Verpackungsmaterial gefertigter Beutel ist oder eine mit dem Verpackungsmaterial als Deckel verschlossene Schale ist.

Durch die Maßnahmen der Erfindung ist der Vorteil erhalten, dass nun erstmals eine Polyethylen-Folie als Druckträger in einem laminierten, insbesondere Polyethylen-dominierten, Verpackungsmaterial zum Einsatz kommen kann, wobei die speziellen Anforderungen an einen Druckträger durch die Polyethylen-Folie erfüllt werden.

Diese Erkenntnis läuft der gängigen Lehrmeinung entgegen, wonach in Fachkreisen immer davon ausgegangen wurde, dass die Verwendung einer Polyethylen-Folie als Druckträger nachteilig wäre. Diese ablehnende Haltung ist wie nachfolgend erörtert begründet, wobei hier Polyethylen mit PE abgekürzt ist:
PE- Blasfolien mit PE-Standard-Dichte (SD-PE) (0,930-0,918 g/cm^3) sind transparent, allerdings sind solche Folien sehr weich und weisen daher eine eingeschränkte Temperaturbeständigkeit auf, was jedoch in Heiß-Siegelanwendungen eine wesentliche Anforderung an den Druckträger ist.

PE-Blasfolien mit PE-Hoher-Dichte (HD-PE) (>0,930 g/cm^3) weisen eine recht gute Steifigkeit auf, allerdings sind sie trüb und daher für einen Druckträger ungeeignet, weil ja gerade die optisch ungestörte Wahrnehmbarkeit des Aufdrucks eine wesentliche Anforderung an den Druckträger ist.

Mono-Direktional-Orientierte (MDO) und Bidirektional-Orientierte (BO), also allgemein orientierte PE-Folien (MDO-PE und BO-PE) weisen die folgenden Eigenschaften auf. Sie sind transparent und zeigen eine hohe Steifigkeit, allerdings weisen sie bedingt durch ihre Orientierung einen Rückschrumpf bei thermischem Einfluss z.B. beim Siegeln auf, was zu einer Wellenbildung bzw. einem Verziehen der Siegelnähte und der aus dem Verpackungsmaterial hergestellten Verpackung führt. Zudem zeigen solche orientierten PE-Folien eine Spleiß-Neigung in Orientierungsrichtung, was zu einer schlechten mechanischen Stabilität von Verpackungen führt, was z.B. im Fall-Test verifiziert wurde.

In Abkehr von diesen ablehnenden Erkenntnissen hat sich nun überraschend bei Versuchen des Anmelders gezeigt, dass eine PE-Folie, die im Cast-Verfahren hergestellt wurde, eine ausgezeichnete Eignung als Druckträger aufweist. Dafür wurden von Anmelder im Wesentlichen zwei Effekte als wichtig identifiziert, und zwar wie folgt. Bei der PE-Folien-Herstellung im Cast-Verfahren wird nämliche eine sehr gute Transparenz und eine hohe Dichte erzielt. Zudem orientiert das Cast-Verfahren die PE-Folie kaum, sodass die Spleiß-Neigung und auch der Rückschrumpf entsprechend gering ausfallen.

Dies führte zu der Erkenntnis, dass anstelle eines Multi-Material-Laminats, bei dem z.B. wie eingangs erörtert Polyethylenterephthalat (PET) als Druckträger verwendet wird und Polyethylen (PE) als Siegelfolie zur Anwendung kommt, die PET-Folie durch die im Cast-Verfahren hergestellte HD-PE-Folie als Druckträger problemlos ersetzt werden kann, was zu einem Mono-Material-Laminat führt, das in weiterer Folge auch unproblematisch recycelbar ist.

Weitere, besonders vorteilhafte Ausgestaltungen und Weiterbildungen der Erfindung ergeben sich aus den abhängigen Ansprüchen sowie der nachfolgenden Beschreibung.

Hinsichtlich der zu erzielenden Parametrisierung der durch Cast-Extrusion hergestellten ersten Polyethylen-Folie hoher Dichte als alternativer Druckträger hat sich gezeigt, dass alle erwünschten Werte oder Wertebereiche unproblematisch zu erreichen sind, nämlich:
- Hohe Transparenz - Haze: <10% vs. ca. 20% bei HD-PE-Blas-Folie.
- Hohe Steifigkeit - Vergleichsmaß: Young-Modul (E-Modul), ca. 1000 MPa vs. 500-600MPa bei Blas-PE // MDO-PE 1400MPa // BOPE 1600MPa.
- Gute Temperaturbeständigkeit (möglichst hoher Schmelzpunkt/Vicat) Tm ca. 130-135°C entsprechend der Erfindung.
- Geringer Rückschrumpf bei Temperatureinwirkung - (führt sonst zu Problemen beim Siegeln etc.) Schrumpf <5% (ist nicht als absolute Grenze, sondern als Richtwert zu verstehen), Schrumpf (10sec. im 110°C Ölbad) MD/TD: Cast-PE 0/0% // MDO-PE 30/0% // BOPE 30/30%.
- Gute mechanische Stabilität / geringe Spleiß-Neigung.

Wie bereits erwähnt findet der alternative Druckträger seine bevorzugte Verwendung in einem Mono-Material-Laminat. Gemäß diesem Aspekt findet die erste Polyethylen-Folie, insbesondere mit ihrer den Aufdruck tragenden Seite, die gegen eine zweite Polyethylen-Folie laminiert ist, und die zweite Polyethylen-Folie als Siegelfolie in dem laminierten Verpackungsmaterial vorteilhaft ihre Verwendung.

Durch die Verwendung des alternativen Druckträgers lassen sich erstmals PE-basierte Mono-Material-Verpackungen im Premium-Verpackung-Segment realisieren. Sortenreines PE-Laminat war in der Vergangenheit z.B. in der Waschpulververpackung und auch in der Tiefkühlkost-Verpackung ein Standard. Hierfür wurden zwei gegeneinander kaschierte Blas-PE Folien eingesetzt. Solche PE-Laminate waren jedoch optisch und haptisch den Laminaten mit BOPP oder BOPET unterlegen und fanden daher in Verpackungen, bei denen diese optischen und/oder haptischen Eindrücke für den Kunden wichtig sind, keinen Einzug.

Hinsichtlich der Dichte der ersten Polyethylen-Folie sei festgehalten, dass diese eine Dichte größer 0,930 g/cm^3, bevorzugt im Bereich von 0,94 bis 0,97 g/cm^3, aufweist. Diese Dichte lässt sich problemlos im Cast-Folien-Herstellungsverfahren realisieren.

Die damit einhergehende Steifigkeit der ersten Polyethylen-Folie erlaubt es, den Aufdruck im Flexo- bzw. Tiefdruckverfahren zu realisieren, wobei durch die Steifigkeit der Folie insbesondere die Möglichkeit besteht, die erste Polyethylen-Folie im Tiefdruck zu bedrucken, was eine Besonderheit darstellt, wenn man den Tiefdruck mit Geschwindigkeiten wie bei herkömmlichen Druckträgern üblich durchführt.

Da die erste Polyethylen-Folie im Laminat-Verbund mit der zweiten Polyethylen-Folie ihren Einsatz in Heiß-Siegelanwandungen finden soll, ist es vorteilhaft, dass die zweite Polyethylen-Folie einen niedrigeren Schmelzpunkt, insbesondere in ihrer Siegelschicht, als die erste Polyethylen-Folie aufweist. Somit bleibt die erste Polyethylen-Folie, insbesondere der mit ihrer Hilfe getragene Aufdruck, bei Hitzeeinwirkung mit den industriell üblichen SiegelTemperaturen im Wesentlichen unbeeinflusst, also qualitativ erhalten. Beim Eintrag von Wärme (insbesondere beim Siegelvorgang) kommt es also im Wesentlichen zu keinerlei Schrumpfung der die Außenlage einer Verpackung bildenden ersten Polyethylen-Folie (insbesondere im Unterschied zu vororientierten Folien wie BO-PE oder MDO-PE) und somit zu keiner Wellenbildung bzw. zu keinem Verziehen der Siegelnähte und der Packungen.

Bei dem Verpackungsmaterial können neben der ersten Polyethylen-Folie, welche den Druckträger des Verpackungsmaterials bildet und bei der Verpackung die Außenlage bildet, und der zweiten Polyethylen-Folie, welche die Siegellage des Verpackungsmaterials bildet und bei der Verpackung die Innenlage bildet, auch weitere Lagen bzw. Folien zur Anwendung kommen. So könnte zusätzlich z.B. eine dritte PE-basierte Folie, z.B. als metallisierte PE-Folie, insbesondere realisiert als AlOx-PE-Folie, zum Einsatz kommen. Damit ließe sich die Durchstoßfestigkeit oder auch die Steifigkeit erhöhen. Diese Lösung würde jedoch bei der Herstellung des Laminats zumindest einen zusätzlichen Kaschierungsschritt benötigen. Der durch die weitere Lage oder Folie erzielte Effekt kann jedoch auch durch eine Dickenerhöhung der zweiten Polyethylen-Folie erreicht werden, wodurch man sich zumindest den zusätzlichen Kaschierungsschritt erspart.

Auch könnte die zweite Polyethylen-Folie eine EVOH-Schicht aufweisen und in dem laminierten Verpackungsmaterial zusätzlich zu ihrer Funktion als Siegelfolie eine Barriere, insbesondere für Gase und/oder Aromastoffe, bilden. Insbesondere dann, wenn der EVOH-Gewichtsanteil an der Gesamtfolie (also dem laminierten Verpackungsmaterial) fünf Prozent nicht überschreitet, kann das laminierte Verpackungsmaterial immer noch gemäß neuester regulatorischer Kriterien als Mono-Material-Laminat gelten.

Daher hat es sich als besonders vorteilhaft erwiesen, dass das Verpackungsmaterial nur durch die erste Polyethylen-Folie und die zweite Polyethylen-Folie und eine dazwischenliegende Haftvermittlerschicht gebildet ist. Diese Ausbildungsform nütz sowohl die optischen und mechanischen Eigenschaften des alternativen Druckträgers auf ideale Weise in Kombination mit dem Vorteil, dass sich das Mono-Material-Laminat unproblematisch und relativ einfach tatsächlich in einem zirkularen sortenreinen Materialkreislauf recyceln lässt.

Hinsichtlich des Herstellungsverfahrens sei hier noch erwähnt, dass zur Herstellung der ersten Polyethylen-Folie das erwähnte Cast-Folien-Extrusion-Verfahren zur Anwendung kommt, wobei ein PE-Granulat aufgeschmolzen wird, über eine Breitschlitzdüse ausgeformt wird und auf eine wassergekühlte Stahlwalze gegossen und in weitere Folge die so erhalte erste Polyethylen-Folie auf einer Speicherrolle aufgewickelt wird.

In weiterer Folge (oder auch inline mit dem Herstellungsprozess, also ohne vorheriges Aufwickeln auf einer Speicherrolle) kann das Bedrucken im Flexo-, oder Tiefdruckverfahren oder auch im Offset oder Digitaldruck erfolgen.

Der Aufdruck ist bevorzugt auf jener Seite der ersten Polyethylen-Folie platziert, die im fertig hergestellten Verpackungsmaterial hin zu der zweiten Polyethylen-Folie, also in das Innere des Verpackungsmaterials, orientiert ist. Der Aufdruck kann jedoch auch auf der anderen Seite der ersten Polyethylen-Folie platziert sein oder auch auf beiden Seiten lokalisiert sein.

In weiterer Folge wird die erste Polyethylen-Folie, insbesondere nur mit ihrer einzigen den Aufdruck tragenden Seite, mit Hilfe einer Haftvermittlerschicht gegen eine zweite Polyethylen-Folie laminiert, wobei hier bevorzugt der Verfahrensschritt des Laminierens durch Trockenkaschieren oder Extrusionskaschieren realisiert ist. Bei der Kaschierung werden beide Polyethylen-Folien von ihren Speicherrollen abgewickelt und es wird eine der beiden Folien (also die erste oder die zweite Polyethylen-Folie) im Auftragswerk einer Kaschiermaschine mit Kleber bestrichen und dann werden in einem Walzenspalt die beiden Polyethylen-Folien mit dem dazwischenliegenden Kleber zusammengepresst und das so erhaltene Laminat danach wieder auf eine Speicherrolle aufgewickelt.

In weiterer Folge erfolgt der Zuschnitt, wobei auf einem Rollenschneider die Rolle des Verpackungsmaterials auf die notwendige bzw. erwünschte Breite geschnitten wird.

Ein derart hergestelltes Verpackungsmaterial als Mono-Material-Laminat kann rein beispielhaft angeführt eine erste Polyethylen-Folie (als Druckträger und Außenlage) mit einer Dicke im Bereich von 15-100µm (bevorzugt 20-50µm) und eine zweite Polyethylen-Folie (als Siegellage und Innenlage) mit einer Dicke im Bereich von 20-300µm (bevorzugt 20-180µm) und einem dazwischenliegenden Kleber (in für die Zwecke des Recyclings vernachlässigbarer Dicke) aufweisen.

Diese und weitere Aspekte der Erfindung ergeben sich durch die nachfolgend erörterte Figur.

### FIGURENKURZBESCHREIBUNG

Die Erfindung wird im Folgenden unter Hinweis auf die beigefügte Figur anhand eines Ausführungsbeispiels noch einmal näher erläutert, worauf die Erfindung jedoch nicht beschränkt ist. Es zeigt auf schematische Weise:

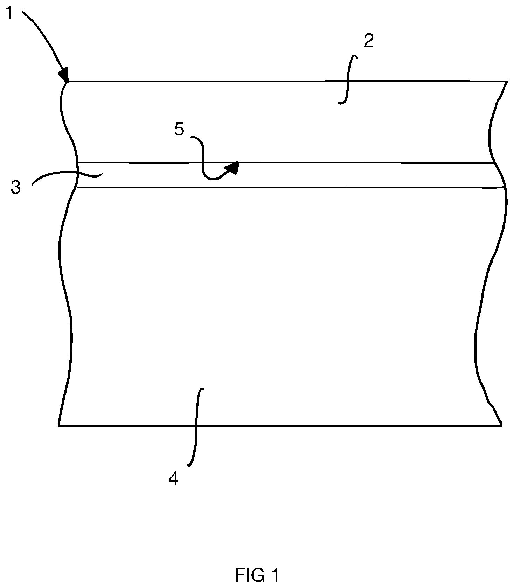

- Fig. 1: einen stark vergrößerten Querschnitt durch ein Verpackungsmaterial mit Verwendung einer ersten Polyethylen-Folie als Druckträger in Kombination mit einer zweiten Polyethylen-Folie als Siegellage.

### BESCHREIBUNG DER AUSFÜHRUNGSBEISPIELE

Fig. 1 zeigt ein erfindungsgemäßes Verpackungsmaterial 1, das durch eine erste Polyethylen-Folie 2 und eine haftvermittelnde Kleberschicht 3 und eine zweite Polyethylen-Folie 4 gebildet ist. Hierbei wird die erste Polyethylen-Folie 2 als Druckträger verwendet und trägt den Aufdruck 5, also das Druckbild, an ihrer der Innenseite des Verpackungsmaterials 1 zugewandten Seite. Eine daraus gefertigte Verpackung (nicht dargestellt) kann z.B. ein Beutel oder auch ein mit dem Verpackungsmaterial 1 als Deckel verschlossene Schale usw. sein.

## Patentansprüche

1. Verwendung einer durch Gießfolien-Extrusion hergestellten ersten Polyethylen-Folie (2) hoher Dichte und hoher Transparenz angegeben als Haze < 10% als Druckträger zum Tragen eines Aufdrucks (5) in einem laminierten Verpackungsmaterial (1), wobei die erste Polyethylen-Folie (2) gegen eine zweite Polyethylen-Folie (4) laminiert ist, und die zweite Polyethylen-Folie (4) in dem laminierten Verpackungsmaterial (1) als Siegelfolie Verwendung findet und einen derart niedrigeren Schmelzpunkt als die erste Polyethylen-Folie aufweist, dass in Heiß-Siegelanwendungen die erste Polyethylen-Folie unbeeinflusst bleibt, wobei die erste Polyethylen-Folie (2) einen Schmelzpunkt im Bereich von 130 bis 135 °C und eine Dichte größer 0,930 g/cm^3 aufweist.

2. Verwendung nach Anspruch 1, wobei die erste Polyethylen-Folie (2) eine Dichte im Bereich von 0,94 bis 0,97 g/cm^3 aufweist.

3. Verwendung nach einem der vorangehenden Ansprüche, wobei das Verpackungsmaterial (1) nur durch die erste Polyethylen-Folie (2) und die zweite Polyethylen-Folie (4) und eine dazwischenliegende Haftvermittlerschicht (3) gebildet ist.

4. Herstellungsverfahren zur Herstellung eines laminierten Verpackungsmaterials (1), wobei eine erste Polyethylen-Folie (2) mit hoher Dichte und hoher Transparenz angegeben als Haze < 10% in einem Gießfolien-Extrusion-Verfahren hergestellt wird, wobei die erste Polyethylen-Folie (2) bei ihrer Verwendung in dem laminierten Verpackungsmaterial (1) als Druckträger zum Tragen eines Aufdrucks (5) zum Einsatz kommt, wobei die erste Polyethylen-Folie (2) mit einem Aufdruck (5) bedruckt wird und die erste Polyethylen-Folie (2) mit Hilfe einer Haftvermittlerschicht (3) gegen eine zweite Polyethylen-Folie (4) laminiert wird, wobei die zweite Polyethylen-Folie (4) in dem laminierten Verpackungsmaterial (1) als Siegelfolie Verwendung findet und einen derart niedrigeren Schmelzpunkt als die erste Polyethylen-Folie aufweist, dass in Heiß-Siegelanwendungen
die erste Polyethylen-Folie unbeeinflusst bleibt, wobei die erste Polyethylen-Folie (2) einen Schmelzpunkt im Bereich von 130 bis 135 °C und eine Dichte größer 0,930 g/cm^3 aufweist.

5. Herstellungsverfahren nach Anspruch 4, wobei der Verfahrensschritt des Laminierens durch Trockenkaschieren oder Extrusionskaschieren realisiert ist.

6. Verpackung gefertigt aus einem gemäß den Ansprüchen 4 bis 5 hergestellten Verpackungsmaterial (1), wobei die Verpackung ein aus dem Verpackungsmaterial (1) gefertigter Beutel ist oder eine mit dem Verpackungsmaterial (1) als Deckel verschlossene Schale ist.

## Claims

1. Use of a first polyethylene film (2) manufactured by cast film extrusion and with a high density and high transparency, given as a haze of < 10%, as a printing substrate for carrying an imprint (5) in a laminated packaging material (1), wherein the first polyethylene film (2) is laminated against a second polyethylene film (4), and the second polyethylene film (4) is used in the laminated packaging material (1) as a sealing film and comprises a melting point which is lower than that of the first polyethylene film such that the first polyethylene film is not affected in heat sealing applications, wherein the first polyethylene film (2) comprises a melting point in the range from 130°C to 135°C and a density of more than 0.930 g/cm³.

2. Use as claimed in claim 1, wherein the first polyethylene film (2) comprises a density in the range from 0.94 to 0.97 g/cm³.

3. Use as claimed in one of the preceding claims, wherein the packaging material (1) is solely formed by the first polyethylene film (2) and the second polyethylene film (4) and an intermediate adhesion-promoting layer (3).

4. A manufacturing process for the production of a laminated packaging material (1), wherein a first polyethylene film (2) with a high density and high transparency, given as a haze of < 10%, is produced in a cast film extrusion process wherein, when it is used in the laminated packaging material (1), the first polyethylene film (2) is utilised as a printing substrate for carrying an imprint (5), wherein the first polyethylene film (2) is printed with an imprint (5) and the first polyethylene film (2) is laminated against a second polyethylene film (4) with the aid of an adhesion-promoting layer (3), wherein the second polyethylene film (4) is used in the laminated packaging material (1) as a sealing film and comprises a melting point which is lower than that of the first polyethylene film such that the first polyethylene film is not affected in heat sealing applications, wherein the first polyethylene film (2) comprises a melting point in the range from 130°C to 135°C and a density of more than 0.930 g/cm³.

5. The manufacturing process as claimed in claim 4, wherein the lamination step of the process is carried out by dry lamination or extrusion lamination.

6. Packaging produced from a packaging material (1) manufactured in accordance with claims 4 to 5, wherein the packaging is a bag produced from the packaging material (1) or a bowl which is sealed with the packaging material (1) as a lid.

## Revendications

1. Utilisation d'un premier film de polyéthylène (2), fabriqué par extrusion en filière plate, à haute densité et haute transparence, exprimée par un haze < 10 %, en tant que support d'impression destiné à porter un motif imprimé (5) au sein d'un matériau d'emballage (1) laminé, le premier film de polyéthylène (2) étant laminé contre un deuxième film de polyéthylène (4), et le deuxième film de polyéthylène (4) étant utilisé, dans le matériau d'emballage (1) laminé, comme film de scellage tout en présentant un point de fusion qui est inférieur par rapport au premier film de polyéthylène, de manière à ce que le premier film de polyéthylène ne subisse aucun changement lors d'applications de thermoscellage, le premier film de polyéthylène (2) ayant un point de fusion compris entre 130 et 135 °C et une densité supérieure à 0,930 g/cm³.

2. Utilisation selon la revendication 1, le premier film de polyéthylène (2) ayant une densité comprise entre 0,94 et 0,97 g/cm³.

3. Utilisation selon l'une des revendications précédentes, le matériau d'emballage (1) étant formé exclusivement par le premier film de polyéthylène (2) et le deuxième film de polyéthylène (4) et une couche intercalaire d'un promoteur d'adhérence (3).

4. Procédé de fabrication d'un matériau d'emballage (1) laminé, consistant à fabriquer par extrusion en filière plate un premier film de polyéthylène (2) pourvu d'une haute densité et d'une haute transparence, exprimée par un haze < 10 %, le premier film de polyéthylène (2) étant mis en œuvre, lorsqu'il est utilisé dans le matériau d'emballage (1) laminé, en tant que support d'impression destiné à porter un motif imprimé (5), le premier film de polyéthylène (2) étant alors pourvu d'un motif d'impression (5) et le premier film de polyéthylène (2) étant laminé contre un deuxième film de polyéthylène (4) à l'aide d'une couche de promoteur d'adhérence (3), le deuxième film de polyéthylène (4) étant utilisé, dans le matériau d'emballage (1) laminé, comme film de scellage et présentant un point de fusion qui est inférieur par rapport au premier film de polyéthylène, de manière à ce que le premier film de polyéthylène ne subisse aucun changement lors d'applications de thermoscellage, le premier film de polyéthylène (2) ayant un point de fusion compris entre 130 et 135 °C et une densité supérieure à 0,930 g/cm³.

5. Procédé de fabrication selon la revendication 4, l'étape de procédé du laminage étant réalisée par contrecollage à sec ou par extrusion-stratification.

6. Emballage, réalisé à partir d'un matériau d'emballage (1) fabriqué selon les revendications 4 à 5, ledit emballage étant une poche réalisée à partir du matériau d'emballage (1) ou une barquette fermée par le matériau d'emballage (1) servant de couvercle.
